# EUROPÄISCHE PATENTANMELDUNG

(11) **EP 3 090 655 A1**
(43) Veröffentlichungstag der Anmeldung: **09.11.2016**
(21) Anmeldenummer: 16168062.4
(22) Anmeldetag: 03.05.2016
(51) Int. Cl.: A47B 87/02, A47B 88/00, A47B 67/04, F16B 12/34

(54) **SCHUBLADENCONTAINERSYSTEM FÜR BÜROMÖBEL**

(30) Priorität: 04.05.2015 DE 202015102258 U
(71) Anmelder: Paul Hettich GmbH & Co. KG, 32278 Kirchlengern (DE)
(72) Erfinder: KLAUSING, Matthias, 32278 Kirchlengern (DE)
(74) Vertreter: Kleine, Hubertus

(57) **Zusammenfassung**

Die Erfindung betrifft ein Schubladenladencontainersystem für Büromöbel, mit mindestens einem Basiselement (10), das ein einteiliges Gehäuse (11), gefertigt aus einem Metallblech, und eine auf Auszugsführungen (13) geführte Schublade (12) aufweist. Das Schubladenladencontainersystem zeichnet sich dadurch aus, dass das Gehäuse (11) des Basiselements (10) an einer Oberseite mindestens ein oberes Montageloch (114) und an einer Unterseite mindestens ein deckungsgleich mit dem oberen Montageloch (114) ausgerichtetes unteres Montageloch (111) aufweist.

## Beschreibung

Die Erfindung betrifft ein Schubladencontainersystem für Büromöbel mit mindestens einem Basiselement, das ein einteiliges Gehäuse, gefertigt aus einem Metallblech, und eine auf Auszugsführungen geführte Schublade aufweist.

Aus der Druckschrift DE 10 2011 050 444 A1 ist ein Schubladencontainer für Büromöbel bekannt, der ein aus einem Metallblech gefertigtes Gehäuse aufweist. In dem Gehäuse sind vertikal ausgerichtete Halteleisten zur Festlegung von Beschlägen, beispielsweise Auszugsführungen für Schubläden angeordnet. Je nach Positionierung der Auszugsführungen in den Halteleisten kann der beschriebene Schubladencontainer mit unterschiedlich großen und einer unterschiedlichen Anzahl von Schubläden individuell konfiguriert werden. Der Schubladencontainer ist insbesondere für eine hängende Montage unter einem Büromöbel, beispielsweise einem Schreibtisch, geeignet. Eine nachträgliche Erweiterung des Schubladencontainers zur Vergrößerung ist jedoch nicht möglich.

Es ist eine Aufgabe der vorliegenden Erfindung, ein flexibel erweiterbares Schubladencontainersystem für Büromöbel mit einem einfachen Aufbau zu schaffen, das vielseitig im Bürobereich verwendbar ist.

Diese Aufgabe wird gelöst durch ein Schubladencontainersystem mit den Merkmalen des unabhängigen Anspruchs. Vorteilhafte Ausgestaltungen und Weiterbildungen sind in den abhängigen Ansprüchen angegeben.

Ein erfindungsgemäßes Schubladencontainersystem der eingangs genannten Art zeichnet sich dadurch aus, dass das Gehäuse des Basiselements an einer Oberseite mindestens ein oberes Montageloch und an einer Unterseite mindestens ein deckungsgleich mit dem oberen Montageloch ausgerichtetes unteres Montageloch aufweist.

Dadurch, dass am Basiselement mindestens ein, bevorzugt mehrere in vertikaler Richtung deckungsgleich angeordnete Montagelöcher auf der Ober- und auf der Unterseite vorgesehen sind, können mehrere der Basiselemente auf einfache Weise über bzw. untereinander angeordnet werden und zu einem Schubladencontainer variabler Größe zusammengestellt werden. Insbesondere ist auch ein nachträgliches Ergänzen eines Schubladencontainers um ein oder mehrere weitere Basiselemente möglich. Die Montagelöcher können zudem zur Befestigung des Schubladencontainersystems an einem Büromöbel dienen, beispielsweise zur hängenden Montage unter einer Tischplatte oder unter einem Regalbrett.

In einer vorteilhaften Ausgestaltung des Schubladencontainersystems ist je mindestens ein oberes Montageloch bzw. je mindestens ein unteres Montageloch in jedem Eckbereich des Basiselements angeordnet. Bevorzugt ist das obere Montageloch als ein Schlüsselloch, gegebenenfalls als Doppelschlüsselloch mit zwei sich gegenüberliegenden Bartabschnitten, ausgebildet. Die Ausbildung des oberen Montagelochs als Schlüsselloch erleichtert insbesondere eine hängende Montage des Schubladencontainersystems, indem Schrauben beispielsweise an der Unterseite einer Schreibtischplatte voreingeschraubt sein können, in die das Schubladencontainersystem mithilfe des Schlüssellochs eingehängt werden kann. Daraufhin kann durch das jeweilige deckungsgleich positionierte untere Montageloch ein Werkzeug, beispielsweise ein Schraubendreher, geführt werden, um die Befestigungsschrauben in der Schreibtischplatte festzuziehen und damit das Schubladencontainersystem an der Schreibtischplatte zu montieren.

Weiter bevorzugt sind in jedem Eckbereich mindestens zwei untere Montagelöcher vorgesehen. Bei dieser Ausgestaltung kann in vorteilhafter Weise in jeweils eines der unteren Montagelöcher eine Aufnahme für ein Verbindungselement für ein weiteres Basiselement eingesetzt werden. Das andere der Montagelöcher steht dann nach wie vor zur Verfügung, um das betreffende Basiselement, wie beispielsweise zuvor beschrieben, hängend zu montieren. Nach der Montage des Basiselements kann ein weiteres Basiselement unterhalb des oberen Basiselements angesetzt werden und mit dem genannten Verbindungselement an dem oberen Basiselement montiert werden. Das Verbindungselement kann beispielsweise einen Einsatz umfassen, der in das untere Montageloch eingesetzt, insbesondere eingerastet wird und der eine Gewindebohrung aufweist, in die eine Schraube eingeschraubt wird.

In einer weiteren Ausgestaltung des Schubladencontainersystems ist das Gehäuse c-förmig ausgebildet mit einem Boden als Unterseite des Gehäuses, zwei Seitenteile und von den Seitenteilen abgewinkelten Laschen an der Oberseite. Bevorzugt kann ein mit dem Boden verbundener Blechabschnitt als Rückwand abgewinkelt sein und zumindest in einem oberen Bereich jeweils mit dem Seitenteil verbunden sein. Die Verbindung kann geschweißt, insbesondere punktgeschweißt, oder genietet sein. Alternativ kann eine Einsteckverbindung vorgesehen sein, bei der an der Rückwand seitlich überstehender Zapfen in eine entsprechend ausgebildete Einstecköffnung an den Seitenteilen eingesteckt und ggf. verpresst wird. Das beschriebene Gehäuse kann so, gegebenenfalls einschließlich der Rückwand, aus einem Blechstück in einem Stanzbiegeprozess erstellt werden.

Zur einfachen Montage des Basiselements kann an jedem der Seitenteile ein Träger befestigt sein, an der jeweils eine Auszugsführung für die Schublade befestigt wird. Die Befestigung der Auszugsführungen kann dabei schnell und werkzeuglos durch Einsteck- und Rastverbindungen erfolgen.

In einer weiteren Ausgestaltung des Schubladencontainersystems weist die Schublade einen Boden und zwei seitliche Seitenzargen auf, die einstückig aus einem Metallblech in einem Stanzbiegeprozess gefertigt sind. Bevorzugt haben die Seitenzargen ein nach unten offenes u-förmiges Profil und können auf die Auszugsführungen aufgesetzt werden. Dabei kann vorteilhaft ein Rastmechanismus zum Festlegen der Schublade auf den Auszugsführungen vorgesehen sein. Weiter bevorzugt können eine Frontblende und/oder eine Rückwand aus Blechabschnitten geformt sein, die sich einstückig nach vorne bzw. hinten an den Boden anschließen. So kann eine Schublade in aus einem zusammenhängenden Blechrohling geformt werden.

In einer weiteren vorteilhaften Ausgestaltung des Schubladencontainersystems ist die Schublade durch ein mechanisches oder elektromagnetisches Schloss verriegelbar. Das Schloss ist beispielsweise in eine Frontblende der Schublade eingesetzt. Weiter bevorzugt sind in einem Boden der Schublade regelmäßig angeordnete Öffnungen, beispielsweise Schlitze oder Löcher, angeordnet, in die Unterteilungen zur Strukturierung des Innenraums der Schublade eingesetzt werden können.

In einer weiteren vorteilhaften Ausgestaltung des Schubladencontainersystems sind in einer Rückwand der Schublade und/oder einer Rückwand des Gehäuses des Basiselements Durchbrüche als Kabeldurchführungen eingebracht. Bevorzugt sind diese Durchbrüche sowohl im Gehäuse als auch in der Schublade vorgesehen und - bezogen auf eine Auszugsrichtung der Schublade - deckungsgleich zueinander positioniert. Auf diese Weise kann ein Kabel, beispielsweise ein Ladekabel für ein elektronisches Gerät, von außen in eine Schublade geführt werden.

In einer weiteren vorteilhaften Ausgestaltung des Schubladencontainersystems sind die Auszugsführungen Teil- oder Vollauszüge und mit einem Selbsteinzug und/oder einer Endlagendämpfung und/oder einer Push-to-Open Öffnungsmechanik versehen. Eine derartige Auszugsführung erleichtert das Öffnen bzw. Schließen der Schublade.

In einer weiteren vorteilhaften Ausgestaltung des Schubladencontainersystems ist ein Deckel vorgesehen, der auf die Oberseite des Basiselements aufgesetzt, bevorzugt aufgerastet werden kann. Bevorzugt weist der Deckel an seiner Unterseite Verbindungselemente auf, die in die oberen Montagelöcher des Basiselements eingreifen. Weiter bevorzugt kann in einem hinteren Bereich des Deckels mindestens eine Federzunge vorgesehen sein, die beim Aufsetzen des Deckels auf das Basiselement mit dem Basiselement, beispielsweise seiner Rückwand, verrastet. Die mindestens eine Federzunge ist dabei bevorzugt so angeordnet, dass sie von außen bei geschlossener Schublade nach dem Verrasten nicht gelöst werden kann.

Die Erfindung wird nachfolgend anhand von Ausführungsbeispielen mithilfe von Figuren näher erläutert. Die Figuren zeigen:
- Fig.1: eine isometrische Darstellung eines Schubladencontainersystems mit drei Basiselementen und Deckel;
- Fig.2: das Schubladencontainersystem der Fig.1 mit einer teilgeöffneten Schublade;
- Fig.3: eine isometrische Explosionsdarstellung eines Basiselements eines Schubladencontainersystems;
- Fig. 4: eine isometrische detaillierte Darstellung eines Gehäuses des Basiselements aus Fig. 3;
- Fig.5: eine isometrische Detaildarstellung einer Schublade eines Basiselements;
- Fig.6a, 6b: jeweils eine Schrägansicht eines Basiselements mit eingesetzter Schublade aus zwei verschiedenen Blickrichtungen;
- Fig.7,8: jeweils ein weiteres Ausführungsbeispiel eines Schubladencontainersystems mit zwei Basiselementen, hängend montiert an einer Tischplatte;
- Fig.9: ein weiteres Ausführungsbeispiel eines Schubladencontainersystems mit drei Basiselementen und einem abgenommenen Deckel; und
- Fig. 10: eine detailliertere Darstellung des Deckels der Fig.9.

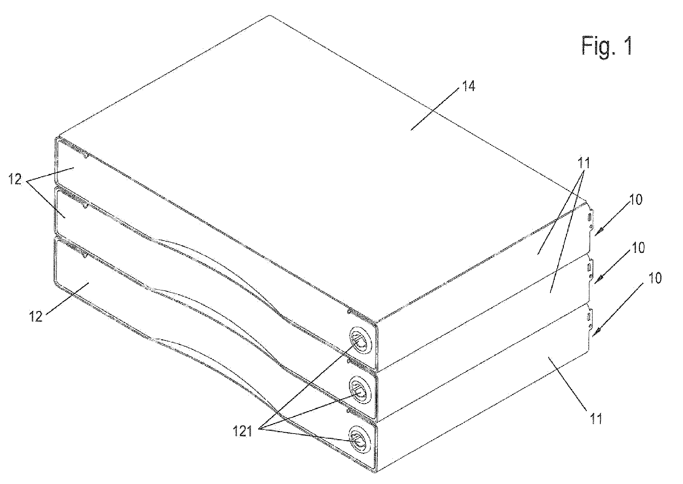

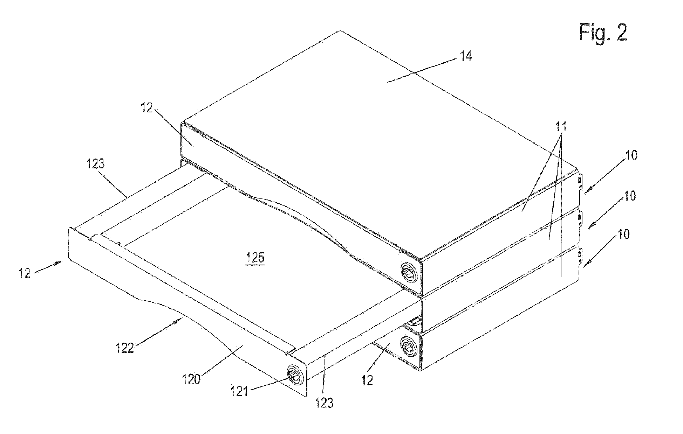

In den Figuren 1 und 2 ist zunächst ein Ausführungsbeispiel eines Schubladencontainersystems für Büromöbel in jeweils einer isometrischen Übersichtszeichnung dargestellt.

Das Schubladencontainersystem umfasst in diesem Ausführungsbeispiel drei Basiselemente 10, die übereinander gestapelt und miteinander verbunden sind. Nach oben hin ist das Schubladencontainersystem durch eine Deckel 14 abgeschlossen. Das Schubladencontainersystem ist im dargestellten Ausführungsbeispiel zur stehenden Verwendung auf einen Schreibtisch oder in einem Regal geeignet.

Die drei Basiselemente 10 sind in diesem Ausführungsbeispiel im Hinblick auf ihre Abmessung und Ausstattung jeweils identisch ausgebildet. Es ist jedoch auch denkbar, dass in einem Schubladencontainersystem Basiselemente 10 mit unterschiedlicher Ausstattung und unterschiedlicher Höhe eingesetzt werden. Jedes der Basiselemente 10 umfasst ein Gehäuse 11 und eine im Gehäuse 11 über eine hier nicht sichtbare Auszugsführung verschiebbar geführte Schublade 12.

Fig. 1 zeigt das Schubladencontainersystem mit geschlossenen Schubladen 12. In Fig. 2 ist beispielhaft eine der Schubladen 12 teilweise geöffnet dargestellt.

Die Schublade 12 umfasst eine Frontblende 120, in die ein Schloss 121 eingesetzt ist. Mit diesem Schloss 121 kann die betreffende Schublade im Gehäuse 11 des jeweiligen Basiselements 10 gegen unbefugtes Herausziehen gesichert werden. Im unteren Bereich der Frontblende 120 ist eine Griffmulde 122 ausgebildet, um die Schublade 12 öffnen zu können. Es versteht sich, dass alternative Griffmöglichkeiten, beispielsweise eine Griffleiste oder ein hervorstehender Bügelgriff alternativ vorgesehen sein können. Auch kann eine Push-to-Open Öffnungsmechanik eingesetzt werden, die ein Öffnen der Schublade 12 durch leichtes Eindrücken in das Gehäuse 11 ermöglicht. Nach Eindrücken und Loslassen springt die Schublade 12 dann zumindest soweit heraus, dass sie am oberen oder unteren Rand der Frontblende 120 zum weiteren Öffnen gegriffen werden kann.

Seitlich sind Schubladenzargen 123 ausgebildet, die einen Querschnitt eines nach unten offenen u-Profils aufweisen. Die Schublade 12 liegt mit ihren Schubladenzargen 123 auf den hier nicht sichtbaren Auszugsführungen auf. Zwischen den Seitenzargen 123 erstreckt sich ein Boden 125, der hier nicht dargestellte regelmäßig angeordnete Öffnungen aufweisen kann, in die Unterteilungen eingesteckt werden können, um den zur Verfügung stehenden Innenraum der Schublade 12 strukturieren zu können.

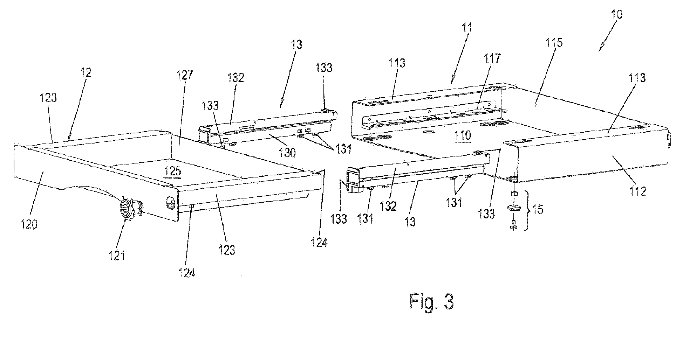

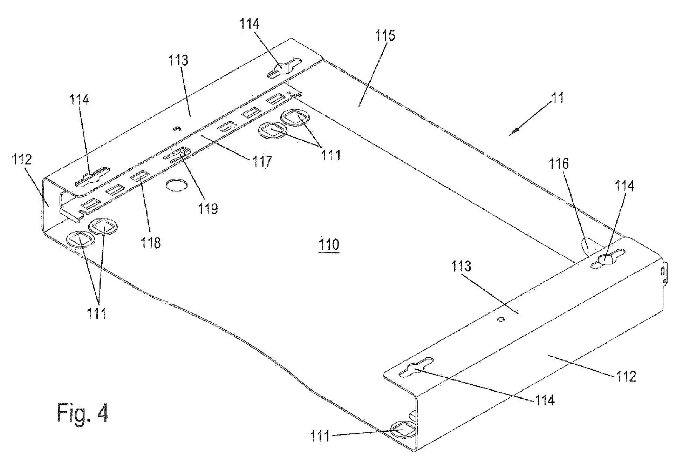

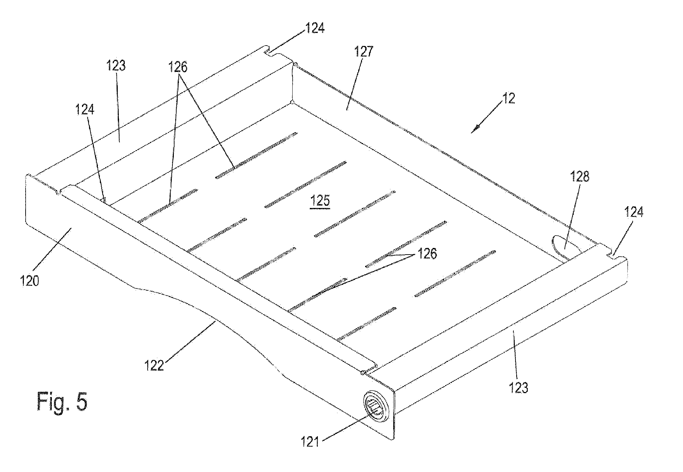

Fig. 3 zeigt das Basiselement 10 des Schubladencontainersystems gemäß den Fig. 1 und 2 in einer isometrischen Explosionsdarstellung. In den Fig. 4 und 5 sind das Gehäuse 11 und die Schublade 12 eines derartigen Basiselements 10 nochmals separat vergrößert wiedergegeben. In allen Figuren bislang und im Folgenden beschriebenen Figuren benennen gleiche Bezugszeichen gleiche oder gleichwirkende Elemente.

Das Gehäuse 11 des Basiselements 10 ist bevorzugt einteilig aus einem Metallblech in einem Stanzbiegeprozess gefertigt. Aus einem Blechabschnitt ist dabei ein Boden 110 gebildet, von dem seitlich Seitenteile 112 abgewinkelt sind, von denen wiederum jeweils eine Lasche 113 abgewinkelt ist. Es entsteht somit ein im Wesentlichen c-förmiges Profil des Gehäuses 11, mit einer in diesem Ausführungsbeispiel vom Boden 110 gebildeten durchgehenden Unterseite, mit durchgehenden Seitenteilen 112 und einer Oberseite, die bis auf die Laschen 113 offen ist.

Ein weiterer, von dem Boden 110 abgewinkelter Blechabschnitt bildet eine Rückwand 115, die zumindest im oberen Bereich mit den Seitenteilen 112 verbunden ist, wodurch das Gehäuse 11 besonders formstabil wird. Die Verbindung von der Rückwand 115 zu den Seitenteilen 112 kann durch Schweißen erfolgen, oder aber, wie im dargestellten Ausführungsbeispiel, indem an den Seitenteilen 112 Laschen mit Einstecköffnungen ausgebildet sind, in die ein entsprechender Zapfen der Rückwand 115 eingesteckt wird und gegebenenfalls in einem Prägeprozess innerhalb der Einstecköffnung verpresst wird.

Im Bereich der vier Ecken des Gehäuses 11 sind in den Boden 110 jeweils paarweise zwei untere Montageöffnungen 111 eingebracht. Diesen in vertikaler Richtung deckungsgleich gegenüberliegend ist in die Laschen 113 an der Oberseite des Gehäuses 11 jeweils ein oberes Montageloch 114 eingestanzt. Vorliegend hat das obere Montageloch 114 die Form eines Doppel-Schlüssellochs mit zwei sich gegenüberliegenden Bartöffnungen.

Die unteren bzw. oberen Montagelöcher 111, 114 dienen der Befestigung eines Basiselements 10 an einem Büromöbel und auch der Verbindung zweier aufeinander gestapelter Basiselemente 10. Für eine hängende Montage eines Basiselements 10 an einem Möbelteil können von unten in das Möbelteil Schrauben eingeschraubt werden, auf die das Gehäuse 11 eines Basiselements 10 mit den als Schlüsselloch ausgebildeten oberen Montagelöchern 114 aufgesetzt und eingeschoben wird. Sodann kann durch jeweils eines der unteren Montagelöcher 111 ein Werkzeug, beispielsweise ein Schraubendreher, geführt werden, mit dem die betreffende Schraube in der Bartöffnung des Schlüssellochs festgeschraubt wird.

Um zwei Basiselemente 10 aufeinander zu schrauben, können Verbindungselemente 15, von denen in Fig.3 beispielhaft ein Satz dargestellt ist, verwendet werden. Für jede Ecke des Basiselements 10 wird ein solcher Satz an Verbindungselementen 15 eingesetzt. Ein Satz an Verbindungselementen 15 umfasst im dargestellten Ausführungsbeispiel einen Einsatz, bevorzugt einen Kunststoffeinsatz, der von oben in jeweils eines der unteren Montagelöcher 111 eingesetzt, bevorzugt eingerastet wird. In dem Einsatz ist an der Oberseite eine Sechskantaufnahme zur Aufnahme einer Gewindemutter ausgebildet, in den die dargestellte Gewindemutter eingepresst wird. Von unten wird dann eine Gewindeschraube in den Einsatz bzw. die Gewindemutter eingeschraubt, die mit ihrem Kopf nach unten über die Unterseite 110 des Gehäuses 11 übersteht.

In jedem Eckbereich des Gehäuses 11 kann ein derartiger Satz von Verbindungselementen 15 bereits eingesetzt werden, bevor das Gehäuse 11 dann wie zuvor beschrieben an einem Büromöbel hängend montiert wird. Trotz eingesetzten Verbindungselementen 15 ist in jedem Eckbereich noch ein unteres Montageloch 111 frei, durch das ein Werkzeug geführt werden kann. Sodann kann ein weiteres Basiselement 10, wiederum mit seinen als Schlüssellöcher ausgebildeten oberen Montagelöchern 114 auf die Schraubenköpfe der Verbindungselemente 15 aufgesetzt und eingehängt werden. Die Schrauben der Verbindungselemente 15 werden dann anschließend wiederum durch die unteren Montagelöcher 111 angezogen. Dieser Vorgang kann fortgesetzt werden, um die gewünschte Anzahl von Basiselementen 10 untereinander hängend im Schubladencontainersystem zu montieren. In alternativen Ausgestaltungen der Verbindungselemente können auch selbstschneidende Schrauben verwendet werden, die ihr Gewinde selbst in den Einsätzen formen.

An den Innenseiten der Seitenteile 112 des Gehäuses 11 sind Träger 117 montiert, beispielsweise punktgeschweißt oder genietet. Die Träger 117 dienen der Befestigung der Auszugsführungen 13, die in Fig. 3 dargestellt sind.

Die Auszugsführungen 13 sind als Voll- oder Teilauszüge ausgebildet und umfassen zumindest eine Korpusschiene 130 sowie eine Ladenschiene 132. Jede der Schienen ist mit Befestigungselementen 131 bzw. 133 zur Befestigung der Auszugsführung 13 an der Träger 117 einerseits bzw. der Seitenzarge 123 der Schublade 12 andererseits ausgestattet. Zur Befestigung der Auszugsführungen 13 im Gehäuse 11 sind in die Träger 117 zum einen Einhaköffnungen 118 eingebracht und zum anderen ist eine Rastzunge 119 vorgesehen.

Die Auszugsführung 13 weist an der Korpusschiene 130 Befestigungselemente 131 in Form von Haken auf, mit denen sie in die Einhaköffnungen 118 eingesteckt und verhakt wird. Die Rastzunge 119 legt die Auszugsführung 13 dann auf dem Träger 117 fest. Wie insbesondere in Fig. 4 gut ersichtlich ist, ist in der Unterseite 110 des Gehäuses 11 eine nicht näher gekennzeichnete Öffnung eingebracht, durch die die Rastzunge 119 gelöst werden kann, falls die Auszugsführung 13 aus dem Gehäuse 11 entnommen werden soll.

Die Schublade 12 ist bevorzugt ebenfalls aus Metallblech in einem Stanzbiegeprozess gefertigt. An den Boden 125 schließen sich seitlich die Seitenzargen 123 an. Ein weiterer Blechabschnitt kann vom Boden 125 als Rückwand 127 abgekantet werden. An der gegenüberliegenden vorderen Kante kann vom Boden 125 die Frontblende 120 durch entsprechende Abkantung ausgebildet sein. In alternativen Ausgestaltungen ist es möglich, Teile der Schublade 12, beispielsweise die Frontblende 120, aus Kunststoff zu fertigen und mit den weiteren, gegebenenfalls wie beschrieben aus Metallblech geformten Komponenten zu verbinden, bevorzugt zu verrasten.

Im Bereich der Seitenzargen 123 sind Aussparungen 124 eingebracht, die der Verbindung der Seitenzargen 123 mit den Auszugsführungen 13 dienen. Die Schublade 12 kann somit den nach unten offenen Seitenzargen 123 auf die Ladenschienen 132 der Auszugsführung 13 aufgesetzt werden, wobei die Befestigungselemente 133 der Ladenschiene 132 in die Aussparung 124 eingreifen und dort verrasten. Auf diese Weise wird die Schublade 12 werkzeuglos auf den Auszugsführungen befestigt.

Bei dem in Fig. 5 dargestellten Ausführungsbeispiel einer Schublade 12 sind im Boden 125 Schlitze 126 in einer regelmäßigen Anordnung eingebracht, in die Trennelemente zur Strukturierung des Innenraums der Schublade 12 eingesetzt werden können. Anstelle der Schlitze 126 können auch regelmäßig angeordnete Bohrungen vorgesehen sein.

Weiterhin ist bei dem Ausführungsbeispiel der Fig. 5 in der Rückwand 127 der Schublade 12 ein Durchbruch 128 als eine Kabeldurchführung eingebracht. Ein vergleichbarer Durchbruch 116 zur Kabeldurchführung ist, wie in Fig. 4 erkennbar, in die Rückwand 115 des Gehäuses 11 eingebracht. Beide Durchbrüche 116, 128 sind in Auszugsrichtung der Schublade 12 gesehen deckungsgleich hintereinander angeordnet, sodass ein von außen zum Schubladencontainersystem geführtes Kabel, beispielsweise ein Ladekabel eines elektronischen Geräts, durch den Durchbruch 116 und den Durchbruch 128 bis in das Innere der Schublade 12 geführt werden kann.

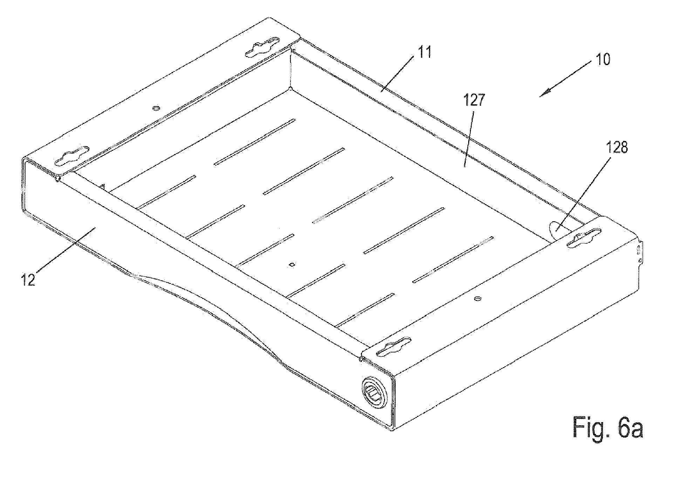

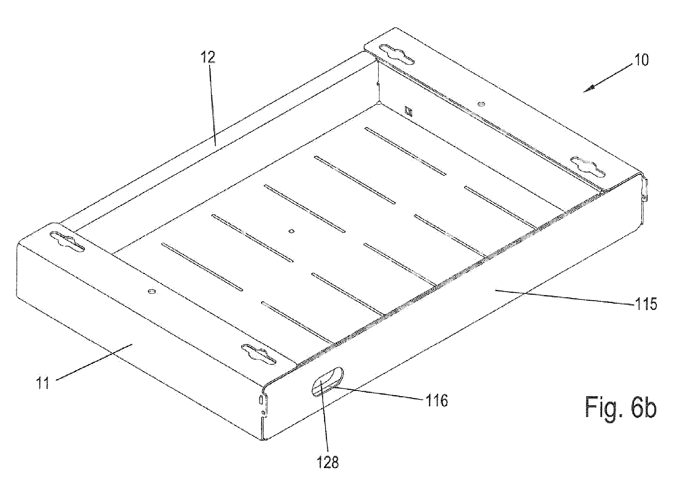

In den Fig. 6a und 6b ist das Basiselement 10, aufweisend das Gehäuse 11 gemäß Fig. 4 und die Schublade gemäß Fig. 5, nochmals aus zwei verschiedenen Blickrichtungen im zusammengesetzten Zustand dargestellt. Insbesondere die Fig. 6b zeigt die zueinander deckungsgleich positionierten Durchbrüche 116, 128 zur Kabeldurchführung in den Innenraum der Schublade 12.

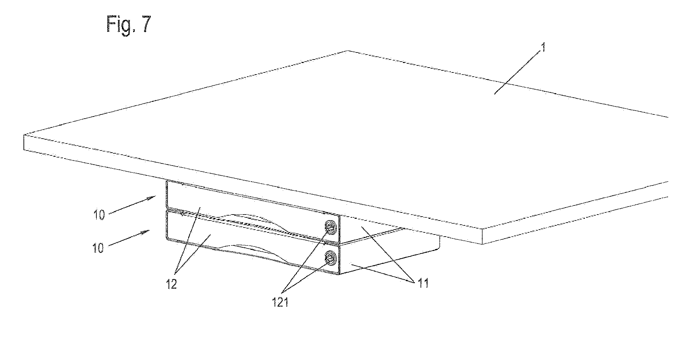

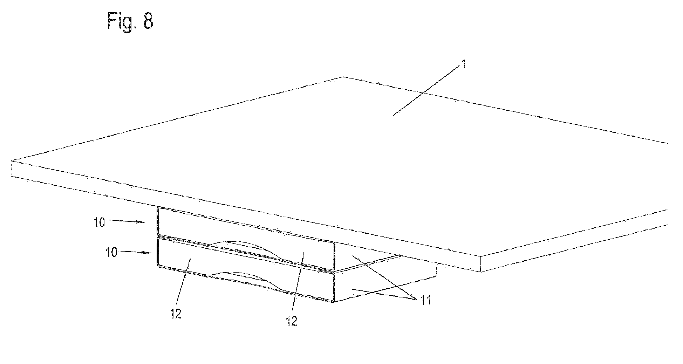

In den Fig. 7 und 8 ist jeweils ein Ausführungsbeispiel eines Schubladencontainersystems mit zwei Basiselementen 10 dargestellt, das hängend an einer Tischplatte 1 montiert ist. Bei dem in Fig. 7 dargestellten Ausführungsbeispiel ist eine Schublade 12 mit Schloss 121 eingesetzt, die auch bereits in den zuvor beschriebenen Ausführungsbeispielen verwendet wurde.

Fig. 8 zeigt eine alternative Ausgestaltung, bei der die Schubladen 12 ohne Schubladenschloss ausgebildet sind. Es versteht sich, dass innerhalb eines Schubladencontainersystems auch Schubladen 12 mit und ohne Schloss 121 verwendet werden können.

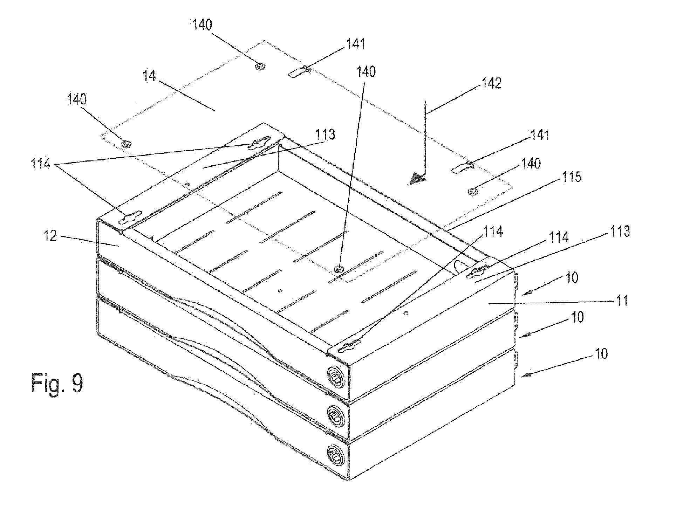

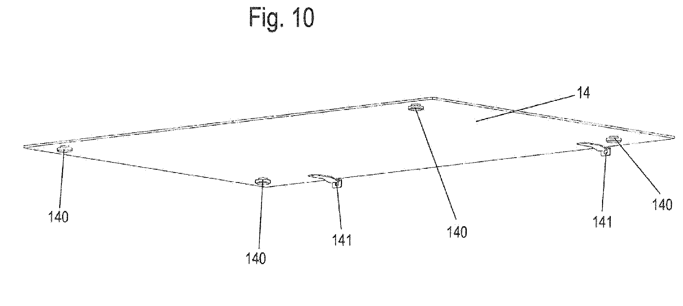

In den Fig. 1 und 2 ist ein Ausführungsbeispiel gezeigt, bei dem das Schubladencontainersystem stehend auf einer Tischplatte oder in einem Regal verwendet wird. Bei diesem System ist ein Deckel 14 als obere Abdeckung vorgesehen. Anhand der Fig. 9 und 10 wird nachfolgend eine vorteilhafte Ausgestaltung eines derartigen Deckels 14 näher erläutert.

Fig. 9 zeigt in einer schematischen isometrischen Darstellung ein Schubladencontainersystem, das drei aufeinandergestellte Basiselemente 10 umfasst. Die Basiselemente 10 weisen jeweils ein Gehäuse 11 auf, das dem in Fig. 4 dargestellten entspricht. Insbesondere ist bei diesem Gehäuse 11 die Oberseite nicht durchgängig ausgebildet, sondern ist abgesehen von den Laschen 113 im mittleren Bereich offen. Der Deckel 14 verschließt diese Öffnung.

Der Deckel 9 ist in der Fig. 9 abgenommen von dem oberen Basiselement 10 und zudem transparent dargestellt. Fig. 10 zeigt den Deckel 14 in einer Schrägansicht von unten detaillierter.

Der Deckel 14 deckt die gesamte Grundfläche des Gehäuses 11 ab. Im Bereich der oberen Montagelöcher 114 des Gehäuses 11 sind an der Unterseite des Deckels 14 Verbindungselemente 140 angeordnet, die ähnlich wie Schrauben mit Schraubenköpfen nach unten aus dem Deckel 14 herausragen. Mit diesen Verbindungselementen 140 wird der Deckel 14 in die als Schlüssellöcher ausgebildeten oberen Montagelöcher 114 von oben eingesetzt und in den oberen Montagelöchern 114 nach vorne geschoben, wie durch den Bewegungspfeil 142 in der Fig. 9 angedeutet ist.

Im hinteren Bereich des Deckels 14 sind nach unten weisende Rastzungen 141 angeordnet, die beim Verschieben des Deckels 14 einfedern und hinter der Rückwand 115 des Gehäuses 11 verrasten. Die Rastzungen 141 verhindern, dass ein eingeschobener Deckel 14 in Richtung der Rückwand zurückgeschoben werden kann, wodurch die Verbindungselemente 140 aus den oberen Montagelöchern 140 entnommen werden könnten. Ein einmal aufgerasteter Deckel 14 kann somit von außen nicht mehr entnommen werden und schützt den Inhalt der oberen Schublade 12, wenn diese abgeschlossen ist.

### Bezugszeichen

- 1: Schreibtischplatte

- 10: Basiselement
- 11: Gehäuse
- 12: Schublade
- 13: Auszugsführung
- 14: Deckel
- 15: Verbindungselemente

- 110: Boden
- 111: unteres Montageloch
- 112: Seitenteil
- 113: Lasche
- 114: oberes Montageloch
- 115: Rückwand
- 116: Durchbruch
- 117: Träger für Auszugsführung
- 118: Einhaköffnung
- 119: Rastzunge

- 120: Frontblende
- 121: Schloss
- 122: Griffmulde
- 123: Seitenzarge
- 124: Aussparung
- 125: Boden
- 126: Schlitz
- 127: Rückwand
- 128: Durchbruch

- 130: Korpusschiene
- 131: Befestigungselement
- 132: Ladenschiene
- 133: Befestigungselement

- 140: Verbindungselement
- 141: Rastzunge
- 142: Bewegungspfeil

## Patentansprüche

1. Schubladenladencontainersystem für Büromöbel, mit mindestens einem Basiselement (10), das ein einteiliges Gehäuse (11), gefertigt aus einem Metallblech, und eine auf Auszugsführungen (13) geführte Schublade (12) aufweist, **dadurch gekennzeichnet, dass**
das Gehäuse (11) des Basiselements (10) an einer Oberseite mindestens ein oberes Montageloch (114) und an einer Unterseite mindestens ein deckungsgleich mit dem oberen Montageloch (114) ausgerichtetes unteres Montageloch (111) aufweist.

2. Schubladenladencontainersystem nach Anspruch 1, bei dem je mindestens ein oberes Montageloch (114) bzw. je mindestens ein unteres Montageloch (111) in jedem Eckbereich des Basiselements (10) angeordnet ist.

3. Schubladenladencontainersystem nach Anspruch 1 oder 2, bei dem das mindestens eine obere Montageloch (114) als ein Schlüsselloch, insbesondere als ein Doppelschlüsselloch mit zwei sich gegenüberliegenden Bartabschnitten, ausgebildet ist.

4. Schubladenladencontainersystem nach Anspruch 2 oder 3, bei dem in jedem Eckbereich des Basiselements (10) mindestens zwei untere Montagelöcher (111) angeordnet sind.

5. Schubladenladencontainersystem nach einem der Ansprüche 1 bis 4, bei dem das Gehäuse (11) des Basiselements c-förmig ausgebildet ist mit einem Boden (110) als Unterseite des Gehäuses (11), zwei Seitenteilen (112) und von den Seitenteilen (112) abgewinkelten Laschen (113) an der Oberseite des Gehäuses (11).

6. Schubladenladencontainersystem nach Anspruch 5, bei dem ein mit dem Boden (110) verbundener Blechabschnitt von dem Boden (110) abgewinkelt ist und eine Rückwand (115) des Gehäuses (11) bildet.

7. Schubladenladencontainersystem nach Anspruch 5 oder 6, bei dem an jedem der Seitenteile (112) ein Träger (117) für die Auszugsführung (13) befestigt ist.

8. Schubladenladencontainersystem nach einem der Ansprüche 1 bis 4, bei dem die Schublade (12) einen Boden (125) und zwei seitliche Seitenzargen (123) aufweist, die einstückig aus einem Metallblech in einem Stanzbiegeprozess gefertigt sind.

9. Schubladenladencontainersystem nach Anspruch 8, bei dem eine Frontblende (120) der Schublade (12) und/oder eine Rückwand (127) der Schublade (12) aus Blechabschnitten geformt sein, die sich einstückig nach vorne bzw. hinten an den Boden (125) anschließen.

10. Schubladenladencontainersystem nach einem der Ansprüche 1 bis 9, bei dem die Schublade (12) ein Schloss (121) zur Verriegelung aufweist.

11. Schubladenladencontainersystem nach einem der Ansprüche 1 bis 10, bei dem in einer Rückwand (127) der Schublade (12) und/oder einer Rückwand (115) des Gehäuses (11) des Basiselements (10) Durchbrüche (128, 116) als Kabeldurchführungen eingebracht sind.

12. Schubladenladencontainersystem nach einem der Ansprüche 1 bis 11, bei dem die Auszugsführungen (13) als Teil- oder Vollauszüge ausgebildet sind und mit einem Selbsteinzug und/oder einer Endlagendämpfung und/oder einer Push-to-Open Öffnungsmechanik versehen sind.

13. Schubladenladencontainersystem nach einem der Ansprüche 1 bis 12, aufweisend einen Deckel (14), der an einer Unterseite Verbindungselemente (140) aufweist, die in die oberen Montagelöcher (114) des Basiselements (10) eingreifen.
